# EUROPEAN PATENT APPLICATION

(11) **EP 3 964 078 A1**
(43) Date of publication of application: **09.03.2022**
(21) Application number: 21194935.9
(22) Date of filing: 03.09.2021
(51) Int. Cl.: A23L 7/10, A23L 29/269, A23L 33/105, A23L 33/15, A23L 33/21

(54) **A COMPOSITION COMPRISING BARLEY MALT EXTRACT, BETA GLUCAN AND B VITAMINS FOR USE IN WOMEN IN AN IMPAIRED LACTATION PERIOD**

(30) Priority: 04.09.2020 PL 43520220
(71) Applicant: Nutropharma Sp. z o.o., 05-506 Lesznowola (PL)
(72) Inventor: Wietrak, Ewa, 05-500 Józefos aw (PL); Kucia, Marzena, 03-230 Warszawa (PL); Popiel, Marta, 05-077 Warszawa-Weso a (PL)
(74) Representative: Godlewski, Piotr

(57) **Abstract**

The object of the present invention is the use of a composition comprising barley malt, beta-glucan, and B vitamins such as choline, folates, and B₆ and B₁₂ vitamins for enhancing the nutritional values of a breastfeeding woman's milk and for an anti-inflammatory and immunomodulatory action during the lactation period. The invention is preferably in the form of an oral powder for administration with any fluid.

## Description

The object of the present invention is the use of a composition comprising barley malt, beta-glucan and B vitamins in an impaired lactation period, more precisely to improve nutritional values of milk, and for an immunomodulatory and anti-inflammatory action. More specifically, the object of the invention is the use of the composition described herein for enhancing nutritional values of milk of a breastfeeding woman and for an anti-inflammatory and immunomodulatory action in the lactation period, by observing the impact of a high content of polysaccharides and beta-glucan on the nutritional value of milk and immunomodulatory properties as well as the impact of choline on the nutritional value of milk and an increase in its production.

Patent application US 2003/0104078 discloses a method for improving antioxidant status in the infant by administering a mixture of natural tocopherols. The invention also relates to, apart from a formulation for infants, a method for improving the antioxidant status of the infant by supplementing the breastfeeding woman, wherein the infant is fed with supplemented breast milk, and a method for improving the antioxidant status of the newborn infant by supplementing the pregnant woman. The disclosure relates to, among others, a supplement for lactating women which comprises a lactating relevant amount of vitamin E, wherein the vitamin E comprises at least one source of γ-tocopherol and at least one source of α-tocopherol, and further comprises a lactating relevant amount of at least one vitamin or mineral selected from the group consisting of calcium, phosphorus, magnesium, vitamin D, fluorine, thiamine, riboflavin, niacin, vitamin B₆, folic acid, vitamin B₁₂, pantothenic acid, biotin, choline, vitamin A, vitamin K, boron, chromium, copper, iodine, iron, manganese, molybdenum, nickel, vanadium, zinc, vitamin C, vitamin E, selenium, and carotenoids.

The publication of international patent application No. WO/2016/027252 discloses a composition comprising at least two food and/or beverage products designed specifically for consumption for one or more periods spanning from conception to a lactation period, wherein the at least one food and/or beverage product comprises: a bundle of fundamental nutrients which comprise at least three fundamental micronutrients for the periods from conception to the lactation period selected from the group consisting of docosahexaenoic acid (DHA), choline, folic acid, calcium, vitamin C, vitamin D, vitamin E, magnesium, potassium, lutein, iodine, iron, fibre, vitamin K, progesterone, dehydroepiandrosterone (DHEA), coenzyme Q10 (CoQ10), analogs and derivatives thereof, and various combinations thereof.

US 2019/0021385 discloses orally dissolvable compositions comprising various combinations of vitamin A, vitamin C, vitamin D₃, vitamin E, vitamin B₁, vitamin B₂, niacin, vitamin B₆, folic acid, vitamin B₁₂, iron, iodine, magnesium, zinc, copper, omega-3 fatty acids, vitamin D, choline, for oral (buccal or sublingual) administration (as a water-soluble film strip) to a subject during prenatal, pregnancy, post-natal or breastfeeding periods. In addition, the specification discloses that folic acid may be in the form of folates or derivatives thereof, and the composition may additionally contain beta-glucan as a carrier polymer.

Patent document PAT.229569 discloses barley malt-based compositions and the uses thereof. The object of the invention is a composition comprising barley malt extract designed for women, containing from 4 500 to 5 000 mg barley malt extract and additionally beta-glucan in the amount of 200 to 500 mg, and its use to aid lactation in women.

However, the presented compositions do not fully exhaust the scope of action of the invention proposed herein. A drawback of prior art solutions is their lack of immunomodulatory and anti-inflammatory impact (through beta-glucan) on the composition of milk of a breastfeeding woman, their failure to increase the nutritional value of breast milk and the form of administration of the compositions disclosed. Following ingestion, beta-glucan is not fully digested, it passes to the small intestine and may penetrate the blood-brain barrier.

Therefore, regardless of the compositions disclosed above, there is still a need to search for the solutions that will help to simultaneously overcome a number of problems (of both a breastfeeding woman and an infant), such as those associated with increasing the nutritional value of milk, an anti-inflammatory action for breastfeeding women, or, finally, an immunity-stimulating action in newborns.

Various methods to affect the nutritional value of milk received by newborns, in particular preterm infants, are known. One of the most common one is the use of so-called breast milk boosters. The boosters enrich women's milk with protein (whey protein hydrolysate and casein derived from animals), minerals (especially calcium and phosphorus), vitamins and trace elements, as well as increase the energy value of mother's milk. It has been proven that breast milk "boosters" accelerate the weight gain of premature infants during supplementation. According to present guidelines, the boosters are added to the breast milk given to preterm infants with a birth weight of <1 500 g, from the moment the infant starts to consume 100 ml/kg BW/24 h. Neither the age nor the body weight up to which a booster should be administered has been clearly determined (according to some data, up to a body weight of 2 000 g). Preferred body weight gains and maintaining them in the right percentile channel are taken into account. It is still recommended for the boosters to be used for 12 weeks following hospital discharge.

A drawback of the supply of boosters is that they are administered as an additive to expressed mother's milk, thus they are an artificial, external influence modifying the nutritional value of mother's milk. The oral use of the composition according to the invention by a breastfeeding woman reduces such additional manipulations related to mother's milk, while mitigating the risk of introducing contaminants that may have a negative impact on the child's life and health.

A drawback of boosters is also their origin, i.e. cow's milk proteins, as these are species-non-specific for humans, as well as the lack of biologically active ingredients, such as lactoferrin, HMO, beneficial bacteria or stem cells characteristic of natural mother's milk.

Additionally, such supplementation is expensive due to a specific composition of the product, i.e. protein content per portion in accordance with ESPGHAN 2010 recommendations (Agostoni et al. Enteral nutrient supply for preterm infants: *Commentary from the european society of paediatric gastroenterology, hepatology and nutrition committee on nutrition.* J. Pediatr Gastroenterol Nutr 50(1):85-91) and the recommendations by Koletzko, Uauy and Pointdexter 2014 (Koletzko, B., Pointdexter, B. and Uauy, R. (2014). Recommended nutrient intake levels for stable, fully enterally fed very low birth weight infants. Nutritional care of preterm infants: Scientific basis and practical guidelines. Koletzko, B., Pointdexter, B.& Uauy, R. Basel, Switzerland, Karger. 110: 297-299).

Another method to increase the nutritional value received by the premature newborn is milk of donors from a breast milk bank; however, currently, access to operating breast milk banks is more difficult and limited (in Poland merely to 16 facilities), which is an unquestionable drawback of the solution, preventing it from being widely used among newborns or infants. In addition, in Poland there are no procedures informing women giving birth about possible availability of milk in milk banks.

It is known that the composition of breast milk is very complex and comprises various amounts of immune active molecules, oligosaccharides, metabolites, vitamins and other nutrients and microorganisms. Existing evidence suggests that the modulation of the composition of woman's milk may prevent allergic diseases early in life. To date, no substance has been found whose use by women in the lactation period could affect the content of immunomodulatory ingredients and increase the effectiveness of breast milk in preventing allergies. There is heterogeneous evidence that the supply of probiotics during pregnancy and lactation may modulate the maturation of the child's immune system towards reducing the risk of skin allergy symptoms. Available methods of action in the case of allergy development in a child are only remedial, symptomatic, i.e., consist in the use of milk substitute formulas with specifically modified cow's milk protein, when breastfeeding is impossible. When allergies with skin symptoms develop, steroid ointments, restrictions in the child's diet or the breastfeeding mother's diet are used. In the case of allergic asthma, inhaled antihistamines are applied.

In the case of mastitis (mammary gland inflammation) development manifested by pain and fever, painkillers or antibiotics are often used. A negative impact of excessive antibiotic therapy on many health aspects not only of women, children, but also of the environment, as well as future narrowed therapeutic options related to antibiotic resistance cannot be ignored. There is no research literature on previously known symptom-oriented interventions to alleviate breast inflammations, e.g. cold compresses or cabbage leaf compresses, describing the effectiveness of these methods. Breast inflammations are one of the most important causes behind women's decision to give up breastfeeding, which is indirectly reflected in relatively low exclusive breastfeeding rates for women in Poland. Regional studies indicate that only 32% of children aged 0-4 months have been exclusively breastfed, without the addition of milk substitute formula. The World Health Organization strives to promote improvements in breastfeeding rates. Therefore, there is a justified social need for as many women as possible to breastfeed.

Various methods to affect an immunomodulatory action and handle allergies occurring in children are known. Mother's milk is one of the most important factors with an undisputed beneficial impact on the development of the immune system. By consuming specific ingredients present in mother's milk, among others lactoferrin, HMO, stem cells, probiotics, vitamins, minerals, the newborn receives the milk that not only has highly nutritious properties adapted to the child's needs, but also the milk with the activity affecting the stimulation, condition and functioning of all immune system cells. Lactoferrin, as a natural milk ingredient, is considered to be an important factor to boost the body's immunity. Immune system maturation impairment, by disturbing the optimum balance between Th cells (a subpopulation of T cells with functions related to stimulating the immune response), may result in the development of allergies, through excessive generation of pro-inflammatory cytokines in response to, for example, dietary proteins or potential environmental allergens. So far, there had been no effective way to reduce the risk of allergies, due to the significance of genetic factors. Various variant uses of probiotics (studies with probiotics) in pregnant and breastfeeding mothers show heterogeneous results, indicating reductions in atopic dermatitis (the first prognostics of immune system impairment in the child). General recommendations for early allergy prevention focus on breastfeeding for as long as possible. There are other known methods to boost the immune system, however, only exclusive breastfeeding has the greatest protective potential. The only available methods of action in the case of allergy development are only remedial, symptomatic and consist in the use of milk substitute formulas, when breastfeeding is impossible. In the case of development of allergies with skin symptoms, steroid ointments, restrictions in the child's diet or the breastfeeding mother's diet are used. In the case of allergic asthma, inhaled antihistamines are applied. The drawbacks of the solutions mentioned above are as follows: bovine lactoferrin, non-human-specific protein derived from animals, a high cost of supply. A Cochrane review of data on studies with the use of probiotics indicated potential benefits of the use of bacteria, however, the knowledge still needs to be extended, especially with regard to the benefits and potential side effects in children from the highest risk group, with a birth weight of less than 1 000 grams. Also, a drawback of the above solutions is that they focus on handling the problem that has already surfaced by attempting to delay it /suppress it, rather than on modifying the child's immune system.

Below discussed are the ingredients of the composition which affect its use as regards the modulation of milk nutritional value, milk immunological properties and the prevention of breast inflammation.

Beta-glucan may have a beneficial impact on the health of breastfed children and mothers. Experimental studies have shown that the intake of beta-glucan affects the composition of milk by reducing the level of pro-inflammatory cytokines, including IL-6 and TNF-alpha. IL-6 together with TNF-alpha are considered to be systemic inflammation markers. Elevated levels of TNF-alpha in human milk stimulate leukocytes to secrete IL-6. The reduction of the excessive amount of pro-inflammatory cytokines may indicate a potential beneficial aspect of beta-glucan action in serious conditions such as a mammary gland infection (mastitis) caused by pathogenic bacteria. Beta-glucan administration inhibited the activation of NF-kB and reduced an inflammatory reaction in mammary gland cells in the animal model. Beta-glucan administration also resulted in an increase in pro-inflammatory TNF-alpha and IL-1β in breast tissues and serum of animals. In the milk of women with subclinical inflammation, increased amounts of TNF-alpha, IL-6, IL-8 were observed in comparison to the milk of healthy women, which may have a negative impact on the proper development of intestinal mucosa, i.e. the first line of defence against pathogens entering the child's body, as well as on gut microbiota.

The source of beta-glucan in the discussed composition is barley malt, which is a source of polysaccharides. Barley malt appears to be one of the major sources of beta-glucan as shown in Table 1 below.

**Table 1. Beta-glucan content in selected food products**

| **Product** | **Beta-glucan content (g/100 g d.m.)** |
|---|---|
| oat | 3-8 |
| **barley** | **2-20** |
| corn | 0.8-1.7 |
| wheat | 0.5-1 |
| sorghum | 1.1-6.2 |
| rye | 1.3-2.7 |
| oyster mushrooms | 0.414 |
| shiitake mushrooms | 0.22 |

Unlike other generally available sources of barley malt, the composition whose use is the object of this application is based on malt extract. This means that the amount of malt is concentrated and much higher compared to standard brewery malt. In addition, the technology of obtaining malt contained in the composition differs from that employed for malts used in brewed or baked goods. Barley malt in commercially available beers has a very low beta-glucan content, which is directly related to an extended time of malting. Malting is a process of soaking barley grains to stimulate germination and initiate enzymatic processes that break down storage protein and sugars, including valuable beta-glucan. The malt in the discussed composition is briefly malted to preserve as much of the active lactation-stimulating ingredient, i.e. beta-glucan, as possible.

The nutritional value of barley malt in fact depends on the content of ingredients found in barley grains themselves. It should be noted that malted grains are much richer in nutritional values. During the germination (malting) process, the bioavailability of the proteins and carbohydrates contained in them is increased. In addition, barley itself is rich in dietary fibre, polyphenols, plant sterols, antioxidants, as well as vitamin E, which is extremely important for the body. In addition, it has minerals such as potassium, magnesium, calcium, phosphorus, sodium and iron. The European Food Safety Authority indicates that foods being a source of large amounts of beta-glucans may have a beneficial impact on the normalisation of glucose levels after a meal and tissue sensitivity to insulin (4 g of beta-glucans for every 30 g of carbohydrates from a meal). Therefore, barley malt and beta-glucan can contribute to the improvement of the availability of glucose (an energy fuel for cells ensuring proper performance of vital functions) in the breastfeeding mother's body. It should be noted that an increase in the amount of protein translates into an increase in the nutritional value of milk.

An indirect impact that the consumption of barley malt by a woman has on the quality, quantity of milk and child's growth parameters is as follows: a higher amount of milk and a higher protein content in milk means a higher daily weight gain of the child.

The nutritional value of milk for a breastfed infant, including the preterm infant, through an indirect action of barley malt and beta-glucan consumed by the breastfeeding woman, has a huge impact on the child. Mother's milk is especially important for the health of the child born prematurely - research shows that it can protect the child against the development of necrotising bowel syndrome, the most serious disease affecting children's life and health. Breast milk reduces the risk of necrotising enteritis (NEC) in premature infants and reduces the cost of hospitalisation related to it. For over 98% of mother's milk share in the premature infant's diet, the incidence of NEC was 1.3% compared to the children fed with formula, where it amounted to 11.1%. The consumption of formula alone resulted in a 12-fold increase in the risk of NEC. In the simulation of costs, the intake of breast milk may result in a decrease in direct costs of medical care provided to premature infants with NEC.

Insufficient milk production at the initial stage of lactation may be associated with a delay in or lack of lactogenesis II (concerning approx. 5-15% of women), resulting in milk deficiency. Impaired daily weight gain of an exclusively breastfed child is one of the most common indicators of impaired lactation. Its etiology can be complex, ranging from incorrect breastfeeding latch, the child's anatomical defects, to impaired milk production in the mother caused, for example, by stress, too rare feeding, type 2 diabetes, etc.

Choline is a B vitamin, present in large amounts, e.g. in egg yolks, meat, milk. The human body can synthesize small amounts of this vitamin in the liver with the use of an oestrogen-sensitive enzyme, but its activity is often impaired and, as a result, the main source of choline for humans is their diet. Studies on the incidence of its impaired activity may concern up to ¾ of the female population in Europe. Consequently, in 1989, the American Institute of Medicine recommended choline as an essential ingredient in the human diet. The daily intake of choline for breastfeeding women should be 550 mg. This amount corresponds to the consumption of about 4 chicken eggs per day. An assessment of dietary intake of this ingredient carried out in European countries indicates that all age groups, and therefore also breastfeeding women, are at risk of choline deficiency. A study on a choline intake by breastfeeding women conducted in Poland showed that an average consumption of chicken eggs (the best source of choline) is only 18 g, i.e., 2-3 eggs per week.

Choline is essential in the human body for a proper development of the nervous system, including the structures responsible for visual memory. It is a component of an important neurotransmitter, i.e., acetylcholine, and the main component of cell membranes as well as it supports the functioning of the liver. Choline is also very important for the regulation of gene reading by providing chemical particles (methyl residues) that attach to DNA strands to block the reading of certain genes that have an adverse impact on human health. Proper methylation of specific sections encoding a given gene has a beneficial and long-term impact on the child's health state. Infants born to mothers who had consumed choline during their pregnancy had cortisol (stress hormone) concentration lower by 1/3 in their umbilical cord blood. This may affect decreased adrenal activity. Cortisol excess maintained for a long time adversely affects metabolism and health, which results in an increased risk of type 2 diabetes, obesity or heart disease. Studies indicate that choline is transported preferentially from the mother's bloodstream to the mammary gland. At the same time, a saving mechanism is observed, i.e., a reduction in the excretion of choline in the mother's urine. Therefore, choline content in human milk is largely dependent on its consumption by the mother, and is also associated with a reduction in the activity of the liver enzyme responsible for its synthesis in the body. The highest choline concentration is found in mature milk as compared to colostrum. As regards a proper development of a breastfed baby, due to the fact that choline is a very significant component found in large quantities in brain structures, it is of huge importance for the child's mental development, which is most intense in the prenatal period and up to 2 years of age.

Therefore, from the point of view of the child's development, it is advantageous to provide it with the optimum amount of choline during this period. Accordingly, for a breastfed child, the most effective way of supplying choline is through mother's milk. The choline consumed in a diet is transported preferentially to the mammary gland. Studies with the supply of 750 mg choline provided to breastfeeding mothers showed statistically significant increases in choline content in milk compared to the placebo group. Polymorphisms in genes encoding the enzymes responsible for *de novo* synthesis of choline and betaine also affect choline content in women's milk. Such polymorphisms may occur even in ¾ of the European population [Am J Clin Nutr 2010;92:336-46.]. Therefore, when choline in the form of the composition according to the invention is supplied, the obj ective of enriching mother's milk with choline, and thus improving its nutritional properties, will be achieved.

The impact of choline as an ingredient in woman's milk was highlighted in a review discussing the relationship between breastfeeding /woman's milk composition and the development of allergies. The content of choline in early breast milk up to 3 days after parturition was shown to be positively associated with maternal serum C-reactive protein (CRP) levels. Since serum CRP is usually elevated during an active infection or acute severe inflammation, this study suggests that choline content in woman's milk constitutes a response to low-grade inflammation in a breastfeeding mother. In fact, a higher dietary intake of choline was independently connected with decreased inflammatory markers, namely decreased serum CRP, IL-6 and TNF-α levels, although the exact cause of this connection remains unclear. Interestingly, the study found that both the level of choline in woman's milk and the level of serum CRP were higher after caesarean section compared to natural birth. This is particularly interesting given a proven relationship between a caesarean delivery and an increased risk of developing allergic diseases. Thus, choline is a milk ingredient which reduces the risk of developing allergies in children, especially those born by caesarean section. In addition, choline in the composition of the invention, acting as an emulsifier, has an impact on the breakdown of fat deposits in clogged milk ducts, which can potentially improve the flow of milk from the mammary gland and mitigate the formation of stasis leading to breast inflammation. This, in turn, is a technical solution to an indicated need for a natural product for use by women during lactation for early prevention of mammary gland inflammations.

Other B vitamins, such as folates, vitamin B₆ and B₁₂, have epigenetic potential, i.e. they affect correct gene reading, which is important for the child's proper development. In addition, the majority of these ingredients pass into woman's milk, affecting its quality and nutritional value. A predominant folate form in milk is 5-methyltetrahydrofolate (an active form of folates). The concentration of folates in milk is generally constant, however, in women with MTHFR polymorphisms, who may constitute up to 50% of the population in Poland, an additional supply of folates in an active form, ready for use, is recommended, among others as a source of folates in milk. Folates, or rather an active form of folic acid (with a methyl residue), are responsible for one of the most important bodily processes, i.e. the synthesis and repair of DNA component strands, RNA, necessary for a proper reading of the genetic code (epigenetic potential).

In turn, the content of vitamin B₆ in breast milk depends on its intake. In the case of vitamin B₆ deficiencies in the mother, low levels of this vitamin in milk may occur. Thus, vitamin B₆ intake is closely correlated with its presence in milk.

Vitamin B₁₂ is an ingredient with epigenetic potential. It is a cofactor of the methionine synthase enzyme, which is responsible for the conversion of homocysteine to methionine in the folate cycle responsible for DNA strand methylation. The neonatal period is a time of particular susceptibility to vitamin B₁₂ deficiencies. Vitamin B₁₂ concentration in the mother translates directly into the level of vitamin B₁₂ in the umbilical cord blood and affects homocysteine concentration in the child. The deficiencies of this ingredient in milk have also been associated with impaired infant growth. Even small portions may influence vitamin B₁₂ content in milk in women without the deficiencies of this vitamin. In case of deficiencies, higher doses of vitamin B₁₂ were administered. Milk production may be improved by the supplementation of folic acid and vitamin B₁₂. Folic acid supplementation regulates immunity and genes associated with breast inflammation (mastitis). Folic acid-regulated genes may be a useful complement to selecting milk production markers and regulating perinatal metabolism in cattle. Thus, this study confirms the immunomodulatory properties of B vitamins.

Despite available publications on the properties of individual compounds, it was not possible to find a prior-art composition containing the listed ingredients, which composition would be used for the indicated therapeutic purpose during lactation (immunomodulation, anti-inflammatory, epigenetic action), as well as used to increase the nutritional value of mother's milk. The invention produces a specific and unexpected effect in the form of an increased nutritional value and induction of an anti-inflammatory effect. The study conducted with the use of barley malt and beta-glucan showed an improvement in daily weight gain rates in children whose mothers had actual insufficient milk production. Therefore, a likely result of beta-glucan supply is also its impact on the nutritional value of breast milk.

Accordingly, the object of the present invention was to demonstrate that the composition comprising barley malt, beta-glucan, and B vitamins (B₆, B₁₂, folates, choline) has an immunomodulatory and anti-inflammatory action during the lactation period, as well as a strong impact on the nutritional value of milk.

The object of the invention is a composition comprising barley malt extract, beta-glucan and B vitamins for use in women in a period of impaired lactation caused by inflammations and milk stasis.

Preferably, the composition has an immunomodulatory and anti-inflammatory action.

Equally preferably, the composition is used for improving nutritional properties of breast milk.

Preferably, B vitamins are choline, folates, vitamin B₆ and vitamin B₁₂.

Preferably, the composition comprises barley malt extract in the amount of 1 000 to 16 000 mg, and beta-glucan in the amount of 100 to 1 200 mg.

Preferably, the composition comprises barley malt extract in the amount of 4 000 to 15 000 mg, and beta-glucan in the amount of 200 to 1 000 mg.

Preferably the composition comprises folates in the amount of 200-600 µg.

Preferably, the folates are in the form of pteroylmonoglutamic acid or calcium L-methylfolate.

Preferably, the composition comprises choline in the amount of 50-400 mg in the form of pure choline, choline hydrochloride, choline bitartrate or choline citrate.

Preferably, the composition comprises choline in the amount of 100-300.

Preferably, the composition comprises vitamin B₆ in the amount of 2.5-7.5 mg in the form of pyridoxine hydrochloride, pyridoxine 5-phosphate or pyridoxine dipalmitate.

Preferably, the composition comprises vitamin B₁₂ in the amount of 2.8-8.4 µg in the form of cyanocobalamin, methylcobalamin or hydroxocobalamin.

Preferably, the composition is a powder and the powder is soluble in any fluid.

Preferably, the fluid is milk, water, yoghurt or any vegetable drink.

An advantage of the solution according to the invention is that so far barley malt and beta-glucan have been associated by the persons skilled in the art of lactation and breast milk only with an increase in the amount of milk. The said solution consists in the use of the discussed composition to increase the nutritional value of milk owing to the presence of barley malt and choline. Such a combination of ingredients provides a beneficial effect due to an impact on the amount of protein (barley malt together with beta-glucan) and fat (choline). Such properties of both indicated substances have not been known so far, and additionally here we can talk about the synergy of action owing to the combination of an impact on the amount of protein and the amount of fat, i.e., important ingredients of human milk responsible for its caloric value, and thus the child's growth parameters.

The technical problem solved by the use of the discussed composition can be defined on several levels. Firstly, as regards the nutritional value of milk, it should be noted that so far one of the most important problems in the case of children born very prematurely has been a rapid achievement of the right body weight and proper nutrition, preferably with mother's milk. Due to the need to increase the nutritional value, the so-called milk boosters are often used, which are obtained from cow's milk. However, this is not the best solution for the child due to a completely different, much poorer and species-non-specific composition of cow's milk. The most effective solution is to obtain the effect of increasing the nutritional value of breast milk, which is facilitated by the ingredients contained in the composition. The object of the invention is to satisfy such a need in breastfeeding mothers by using non-obvious, natural ingredients such as beta-glucan, barley malt and B vitamins to naturally boost woman's milk composition. As a result, the child receives biologically active mother's milk, which is adapted to the child's current nutritional needs, while lactation is maintained, the cost of composition supply is relatively low compared to the purchase of milk substitute formulas or breast milk boosters. To this end, the invention provides suitable amounts of active ingredients such as beta-glucan (affecting the amount of protein), choline (affecting the amount of fat, with the content of choline as an ingredient supporting the child's nervous system and with an epigenetic effect) and B vitamins (affecting the quality of breast milk; with B vitamins supporting the child's development and growth), which affect the nutritional value of breast milk. The invention naturally improves the quality of breast milk, while adapting it to the child's individual needs.

Secondly, immunomodulation. Children born by caesarean section are at increased risk of inflammation and related consequences. So far, the only known recommendation as to how the risk of allergies may be minimized has been breastfeeding, since breast milk contains immune-supporting ingredients which reduce the incidence of allergic diseases in the future. However, to date, no substance has been found whose use by women in the lactation period could affect the content of immunomodulatory ingredients and thus increase the effectiveness of woman's milk in preventing allergies. By reducing specific pro-inflammatory cytokines through supplementation of B vitamins to a breastfeeding mother, it is possible to reduce the risk of allergy development in children, especially those born by caesarean section. Therefore, the discussed solution is significantly better than those currently recommended. The use of the discussed composition is a chance for effective and significantly better results in solving the problem of allergies. The object of the invention is therefore to satisfy the need to reduce the risk of allergies in a breastfed child. The invention provides a composition based on barley malt, beta-glucan and B vitamins. Beta-glucan and choline affect parameters related to the functioning of immune system cells. B vitamins, including choline, affect a correct reading of the child's genetic code as ingredients with epigenetic potential. This, in turn, is a technical solution to the indicated need, i.e., to improve the cytokine profile in mother's milk, and thus affect proper maturation of the child's immune system, which results in protecting the child against the development of allergies in the future.

Thirdly, an anti-inflammatory effect. One of the biggest problems that cause women to give up breastfeeding is stasis and inflammation in the mammary gland. Premature termination of breastfeeding is not beneficial from the point of view of health for both the mother and the child. So far, despite attempts to prevent such problems (the technique of and an increase in the frequency of feeding, oral use of lecithin by the mother, cabbage compresses and cooling gel compresses), no effective method for preventing inflammation has been found. It appears that with an appropriate addition of ingredients such as beta-glucan to a diet, a non-obvious effect consisting in a decrease in pro-inflammatory cytokines should be expected. The reduction of excessive pro-inflammatory cytokines indicates a beneficial aspect of beta-glucan activity in serious conditions such as mammary gland infection (mastitis) caused by pathogenic bacteria.

The supply of beta-glucan inhibited the activation of NF-kB and reduced the inflammatory reaction in mammary gland cells in the animal model. Beta-glucan administration also resulted in an increase in pro-inflammatory TNF-alpha and IL-1β in breast tissues and serum of animals. The object of the invention is to satisfy the need (supply) on the part of breastfeeding mothers for a product that has the potential to reduce inflammation within the mammary gland. Furthermore, the invention will act from the inside to modify a potential risk of breast inflammation development rather than from the outside at the time it occurs. To this end, the invention provides optimum amounts of beta-glucan, choline with a proven anti-inflammatory impact of reducing pro-inflammatory cytokines, optimization of CRP index; in addition, choline, acting as an emulsifier, affects the breakdown of fat deposits in clogged milk ducts, which can potentially improve the flow of milk from the mammary gland and mitigate the formation of stasis leading to breast inflammation. This, in turn, is a technical solution to the indicated need for a natural product for use by women during lactation for the early prevention of mammary gland inflammations.

By using ingredients such as choline and other B vitamins, it is possible to affect epigenetic properties of breast milk by affecting gene expression modulation (e.g. reducing the risk of obesity, diseases of civilization) and owing to beta-glucan and choline or other B vitamins, it is possible to improve the properties of milk towards immunomodulation by accelerating the maturation of the immune system (e.g., reducing the risk of allergy, infection).

At the same time, in Poland, but also throughout Europe, the number of women who exclusively breastfeed is constantly decreasing. There are many reasons for this, and from a social, expert and health point of view, this is a very unfavourable trend. Therefore, there is a justified social need for as many women as possible to breastfeed, which may be addressed by the use of the composition according to the invention. As one of the reasons for early resignation from breastfeeding indicated by women is inflammation, stasis and painful clogging of the mammary gland. The use of a product that could prevent such problems also constitutes a response to an important social need to improve breastfeeding rates.

### Embodiments

The object of the invention is presented in the following embodiments, which are not limiting in any way.

### Example 1

The composition of ingredients comprising 4 800 mg barley malt, 300 mg beta-glucan, 100 mg choline, 2.5 mg vitamin B₆, 200 µg folates and 2.8 µg vitamin B₁₂ was dissolved in milk (150 mL) and administered to a breastfeeding woman to support immunomodulatory functions of breast milk.

The composition was administered throughout the breastfeeding period, once a day.

### Example 2

The composition of ingredients comprising 9 600 mg barley malt, 600 mg beta-glucan 200 mg choline, 5 mg vitamin B₆, 400 µg folates and 5.6 µg vitamin B₁₂ was mixed with yoghurt (150 g) and administered to a breastfeeding woman to increase the nutritional value of breast milk. The composition was administered for a period of two weeks, once a day.

### Example 3

The composition of ingredients comprising 14 400 mg barley malt, 900 mg beta-glucan 300 mg choline, 7.5 mg vitamin B₆, 600 µg folates and 8.4 µg vitamin B₁₂ was dissolved in water (150 mL) to obtain an anti-inflammatory action and, in case of first symptoms of breast inflammation, to unclog milk ducts.

The composition was administered once a day for seven days.

### Common Observations and Results for Examples 1-3

The study confirmed the impact of a composition containing barley malt, beta-glucan and B vitamins on infant / newborn weight gain (Table 2).

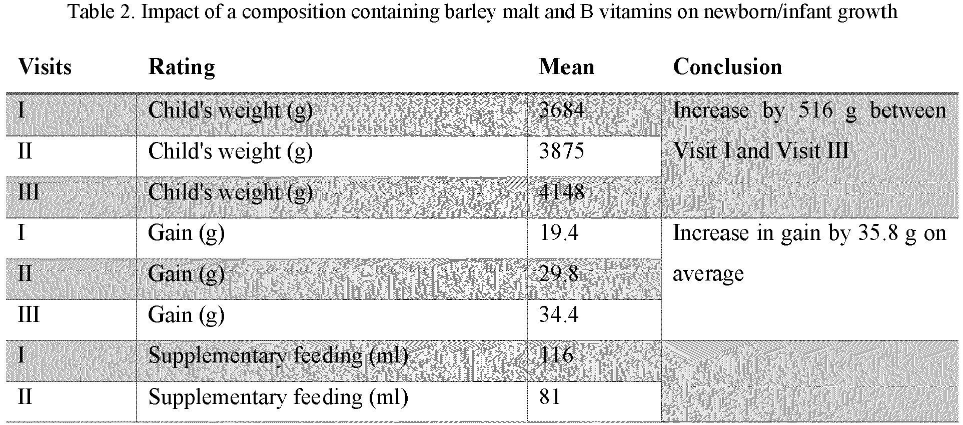

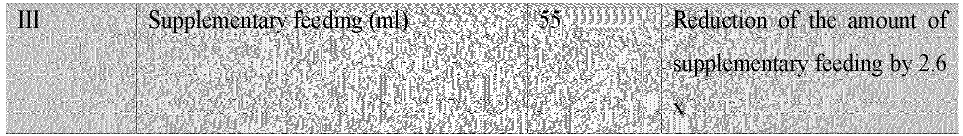

The improvement in weight gain occurred after 7 days (Visit II), while after 14 days (Visit III) it exceeded 500 g. An increase in the child's weight, greater weight gains for the child and smaller amounts of the formula supplemented to the child prove a greater nutritional value of breast milk and confirm the claimed action of the composition.

This study also confirmed the impact of a composition containing barley malt and B vitamins on an increase in the amount of expressed milk (Table 3). An increase in the amount of expressed milk was observed already after 7 days (Visit II), and after 14 days (Visit III) it was as much as 2.4 times higher. The increase in the amount of expressed milk indicates the ease with which breast milk flows through the milk ducts, which mitigates the accumulation of breast milk there (in the milk ducts). Breast milk stasis is an initial stage that can lead to the development of inflammation and breast inflammation. Accordingly, an increase in the amount of expressed milk prevents breast inflammation.

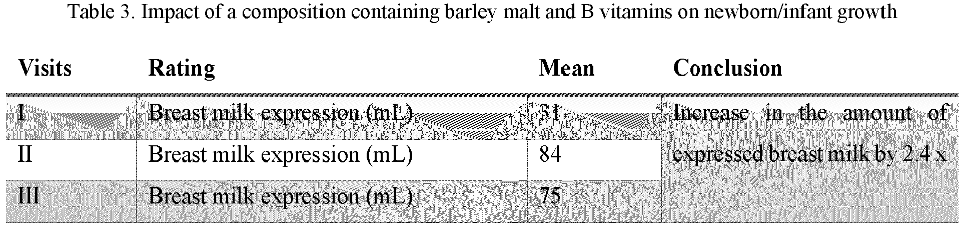

### References

1) Ustundag B, Yilmaz E, Dogan Y, et al. Levels of cytokines (IL-1beta, IL-2, IL-6, IL-8, TNF-alpha) and trace elements (Zn, Cu) in breast milk from mothers of preterm and term infants. Mediators of Inflammation. 2005 Dec;2005(6):331-336.
2) Zhu W et al. Int Immunopharmacol. 2013;15(2):457-65.
3) Zhu W et al. Inflamm Res. 2011;60(10):937-45.
4) Tuaillon, E., Viljoen, J., Dujols, P. et al. Subclinical mastitis occurs frequently in association with dramatic changes in inflammatory/anti-inflammatory breast milk components. Pediatr Res 81, 556-564 (2017).\
5) Chen L, Liu HG, et al.Zhonghua Jie He Hu Xi Za Zhi. 2020 Feb 6;43(0):E005. doi: 10.3760/cma.j.issn.1001-0939.2020.0005.
6) Jung K et al. J Vet Med B Infect Dis Vet Public Health. 2004;51(2):72-6.
7) Aleksandra Piotrowska, Ilona Iżykowska, Marzena Podhorska-Okolów, Maciej Zabel, Piotr Dzi 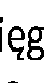 giel
8) Budowa bialek z rodziny NF-κB i ich rola w procesie apoptozy Postepy Hig Med Dosw 2008; 62
9) Khawaja Muhammad Imran Bashir Int. J. Mol. Sci. 2017, 18, 1906;
10) Sawagado et al. Annale debiologic clinique, 1998;46,126-134
11) Uchiyama et al. BMC Research Notes 2012, 5:189
12) Colaizy TT, Bartick MC, Jegier BJ, et al. Impact of Optimized Breastfeeding on the Costs of Necrotizing Enterocolitis in Extremely Low Birthweight Infants [ J Pediatr. 2016;175:100-105.e2. doi:10.1016/j.jpeds.2016.03.040
13) Magdalena Nehring-Gugulska et al. Potozna Nauka i Praktyka (nr 1(29)2015) "Stymulacja laktacji z wykorzystanie stodu j 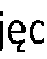 czmiennego a parametry wzrostowe dziecka w przypadku kryzysu laktacyjnego"
14) EFSA Journal 2011;9(6):2207
15) Sawadogo L, Sepehri H, Houdebine LM. Evidence for a stimulating factor of prolactin and growth hormone secretion present in brewery draff Reprod Nutr Dev. 1989;29(2):139-46
16) Arnould et al., 1983
17) Sawagado L, Houdebine LM. Identification of the lactogenic compound present in beer. Ann Biol Clin (Paris). 1988;46(2):129-134.
18) da Costa et al. FASEB J.2014; 28:2970-2978
19) Vennemann FB et al. Br J Nutr. 2015; 1:1-10
20) Weker H. et al. Roczniki PZH, 1999 50 No. 4; 435-443
21) Jiang, X. et al. FASEB J. 2012; 26, 3563- 3574
22) Davenport C et al. J Nutr Biochem. 2015;26(9):903-11
23) Zeisel SH. International Journal of Women's Health. 2013;5
24) Ilcol YO et al. J Nutr Biochem. 2005;16(8):489-99
25) Boeke CE et al. Am J Epidemiol. 2013; 177(12):1338-47.
26) Fischer, L. M., et al. The American Journal of Clinical Nutrition 2010; 92(2): 336-346.
27) Supriyati I et al. J Animal Sci Tech. 2016; 58:30
28) Daniel Munblit, Diego G. Peroni, Alba Boix-Amorós, Peter S. Hsu, Belinda Van't Land, Melvin C. L. Gay, Anastasia Kolotilina, Chrysanthi Skevaki, Robert J. Boyle, Maria Carmen Collado, Johan Garssen, Donna T. Geddes, Ralph Nanan, Carolyn Slupsky, Ganesa Wegienka, Anita L. Kozyrskyj, John O. Warner. Nutrients. 2017 Aug; 9(8): 894. Published online 2017 Aug 17.
29) Ozarda Y, Cansev M, Ulus IH. J Hum Lact. 2014 May; 30(2):161-6.
30) Detopoulou P, Panagiotakos DB, Antonopoulou S, Pitsavos C, Stefanadis C. Am J Clin Nutr. 2008 Feb; 87(2):424-30.
31) Adv. Nutr. 2012; 3: 362-369.
32) Nehring-Gugulska M, Żukowska-Rubik M, Pietkiewicz A: Karmienie piersiq w teorii i praktyce. Podr 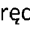 cznik dla doradców i konsultantów laktacyjnych oraz potoznych, piel 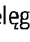 gniarek i lekarzy. Medycyna Praktyczna 2017: Annex 3: Uzupetnianie diety w okresie laktacji.
33) Khan MZ, Khan A, Xiao J, Dou J, Liu L, Yu Y. Metabolites. 2020 Jun 25;10(6):263.

## Claims

1. A composition comprising barley malt extract, beta-glucan and B vitamins for use in women in the period of impaired lactation caused by inflammation or milk stasis.

2. The composition for use of claim 1 having an immunomodulatory and anti-inflammatory action.

3. The composition for use of claim 1 to improve nutritional properties of breast milk.

4. The composition for use of any preceding claim, **characterised in that** B vitamins are choline, folates, vitamin B₆ and vitamin B₁₂.

5. The composition for use of any preceding claim, **characterised in that** it comprises barley malt extract in the amount of 1 000 to 16 000 mg, and beta-glucan in the amount of 100 to 1 200 mg.

6. The composition for use of claim 5, **characterised in that** barley malt extract is in the amount of 4 000-15 000 mg and beta-glucan is in the amount of 200-1 000 mg.

7. The composition for use of claim 4, **characterised in that** it comprises folates in the amount of 200-600 µg.

8. The composition for use of claim 7, **characterised in that** folates are in the form of pteroylmonoglutamic acid or calcium L-methylfolate.

9. The composition for use of claim 4, **characterised in that** it comprises choline in the amount of 50-400 mg in the form of pure choline, choline hydrochloride, choline bitartrate or choline citrate.

10. The composition for use of claim 9, **characterised in that** it comprises choline in the amount of 100-300 mg.

11. The composition for use of claim 4, **characterised in that** it comprises vitamin B₆ in the amount of 2.5-7.5 mg in the form of pyridoxine hydrochloride, pyridoxine 5-phosphate or pyridoxine dipalmitate.

12. The composition for use of claim 4, **characterised in that** it comprises vitamin B₁₂ in the amount of 2.8-8.4 µg in the form of cyanocobalamin, methylcobalamin or hydroxocobalamin.

13. The composition for use of any preceding claim, **characterised in that** it is a powder.

14. The composition for use of claim 13, **characterised in that** the powder is soluble in any fluid.

15. The composition for use of claim 14, **characterised in that** the fluid is milk, water, yoghurt or any vegetable drink.
